# EUROPEAN PATENT APPLICATION

(11) **EP 4 848 654 A1**
(43) Date of publication of application: **02.12.2026**
(21) Application number: 25179919.3
(22) Date of filing: 30.05.2025
(51) Int. Cl.: H04L 9/32

(54) **DATA STORAGE AND VERIFICATION**

(71) Applicant: SevenHeaven AI Oy, 84100 Ylivieska (FI)
(72) Inventor: SALMELA, Jari, 84100 Ylivieska (FI); KÄHKÖNEN, Saku, 84100 Ylivieska (FI)
(74) Representative: Berggren Oy

(57) **Abstract**

Methods, an apparatus, and a computer program product are disclosed. A method comprises: computing a first cryptographic hash for one or more entries to be stored in one or more databases using a first algorithm, wherein the first cryptographic hash is resistant to brute force attacks; computing a hash-based signature for the one or more entries using a second algorithm, wherein the hash-based signature is quantum resistant; computing a second cryptographic hash based on the first cryptographic hash and the hash-based signature using a third algorithm, wherein the second cryptographic hash is quantum resistant; storing the second cryptographic hash in a plurality of distributed ledgers to obtain a plurality of transaction identifiers from the plurality of distributed ledgers; and storing the one or more entries, the hash-based signature, and the plurality of transaction identifiers in the one or more databases, wherein the one or more databases are configured to log database transactions made to the one or more entries and the plurality of transaction identifiers, and wherein the first algorithm, the second algorithm, and the third algorithm are different from each other.

## Description

### Technical Field

The present solution generally relates to methods, an apparatus, and a computer program product for data storage and data verification.

### Background

Weld logs may be used for tracking and ensuring quality of newly constructed piping as well as for maintenance of existing piping. Inspection results, such as X-ray inspection results, may be logged in a weld log. Weld logs should be resistant to tampering to ensure that the information stored in a weld log is reliable, or at least that information that has been tampered with can be identified. This ensures that quality of the piping can be verified, and allows for identifying potential safety hazards.

### Summary of the Invention

The scope of protection sought for various embodiments of the invention is set out by the independent claims. Various embodiments are disclosed in the dependent claims. The embodiments and features, if any, described in this specification that do not fall under the scope of the independent claims are to be interpreted as examples useful for understanding various embodiments of the invention.

According to a first aspect, a first (computer-implemented) method comprises: computing a first cryptographic hash for one or more entries to be stored in one or more databases using a first algorithm, wherein the first cryptographic hash is resistant to brute force attacks; computing a hash-based signature for the one or more entries using a second algorithm, wherein the hash-based signature is quantum resistant; computing a second cryptographic hash based on the first cryptographic hash and the hash-based signature using a third algorithm, wherein the second cryptographic hash is quantum resistant; storing the second cryptographic hash in a plurality of distributed ledgers to obtain a plurality of transaction identifiers from the plurality of distributed ledgers; and storing the one or more entries, the hash-based signature, and the plurality of transaction identifiers in the one or more databases, wherein the one or more databases are configured to log database transactions made to the one or more entries and the plurality of transaction identifiers, and wherein the first algorithm, the second algorithm, and the third algorithm are different from each other.

According to a second aspect, a second (computer-implemented) method comprises: obtaining a hash-based signature computed using a second algorithm and stored in one or more databases, wherein the one or more databases are configured to store one or more entries, the hash-based signature, and a plurality of transaction identifiers, wherein the one or more databases are configured to log database transactions made to the one or more entries and the plurality of transaction identifiers, and wherein the hash-based signature is quantum resistant; verifying that the hash-based signature corresponds to the stored one or more entries; computing a first cryptographic hash for the stored one or more entries using a first algorithm, wherein the first cryptographic hash is resistant to brute force attacks; computing a second cryptographic hash based on the first cryptographic hash and the hash-based signature using a third algorithm, wherein the second cryptographic hash is quantum resistant; obtaining second cryptographic hashes stored in a plurality of distributed ledgers using the plurality of transaction identifiers; and verifying the second cryptographic hash by comparing the computed second cryptographic hash to the stored second cryptographic hashes, wherein the first algorithm, the second algorithm, and the third algorithm are different from each other.

The second cryptographic hash may be computed also based on at least one earlier second cryptographic hash stored in the plurality of distributed ledgers.

The first and/or second method may comprise: concatenating the first cryptographic hash and the hash-based signature to form a concatenated hash; and computing the second cryptographic hash based on the concatenated hash.

The hash-based signature may be based on at least one random or pseudorandom value.

The plurality of distributed ledgers may comprise at least three distributed ledgers.

The plurality of distributed ledgers may comprise one or more blockchains.

The plurality of distributed ledgers may be selected from a pool of distributed ledgers.

The one or more entries and the plurality of transaction identifiers may be stored in the one or more databases with a single database transaction.

At least one of the plurality of transaction identifiers and the hash-based signature may be stored as a key-value pair in the one or more databases.

The one or more entries and the plurality of transaction identifiers may be stored in an immutable database.

The first algorithm may comprise a key derivation function, preferably comprising key stretching, more preferably an Argon2 function, such as Argon2d, Argon2i, or Argon2id.

The hash-based signature may be a stateless hash-based signature, preferably a SPHINCS+ signature, such as a SPHINCS+-SHAKE256 signature, a SPHINCS+-SHA-256 signature, or a SPHINCS+-Haraka signature.

The third algorithm may comprise a Secure Hash Algorithm 3, SHA-3, algorithm, preferably a SHA3-512 algorithm.

The hash-based signature may stored in the one or more databases in encrypted form.

According to a third aspect, an apparatus comprises one or more processors, one or more memories including computer program code, the one or more memories and the computer program code configured to, with the one or more processors, cause the apparatus to perform the first method and/or the second method.

According to a fourth aspect, a computer program product comprises computer program code configured to, when executed by one or more processors, cause an apparatus or a system to perform the first method and/or the second method.

### Brief Description of the Drawings

FIG. 1 depicts an example process of storing and verifying weld logs;
FIG. 2 depicts an example system;
FIG. 3 illustrates embodiments of an apparatus;
FIG. 4 is a flow chart illustrating a method for data storage;
FIG. 5 shows an example implementation of the method of FIG. 4;
FIG. 6 is a flow chart illustrating a method for data verification; and
FIG. 7 shows an example implementation of the method of FIG. 6.

### Detailed Description of the Invention

The following description and drawings are illustrative and are not to be construed as unnecessarily limiting. The specific details are provided for a thorough understanding of the disclosure. However, in certain instances, well-known or conventional details are not described in order to avoid obscuring the description. In this specification, reference to "one embodiment" or "an embodiment" means that a particular feature, structure, or characteristic described in connection with the embodiment is included in at least one embodiment of the disclosure. References to an embodiment can be, but are not necessarily, references to the same embodiment in the present disclosure.

The present solution is particularly useful for storing and verifying weld or welding logs, or data included in a weld log. A weld log documents welding-associated details such as the competence of the welder, welding parameters, and material certificates, ensuring that the data stored therein is not modified and can be audited. In the case of delivery pipework, the inspections and tests performed preferably fulfil the pressure equipment directive (PED) and/or EN ISO 12480. A digital weld log may be stored and subsequently verified as described herein, and is used as the main example for describing and illustrating various embodiments. However, the present solution may alternatively or additionally be applied in other domains that require high levels of security, reliability, and tamper resistance. For example, the present solution may be applied to storing and verifying information related to e.g. the following:
- construction, e.g. information related to the progress and inspections carried out at a construction site, quality documentation, and approval of construction drawings and/or plans. The information may be related to e.g. scaffolding, insulation, construction drawings and/or plans, and/or any other aspect of construction. For example, all inspections of work stages and materials may be logged in distributed ledgers and/or database(s) as described herein, allowing authorities and clients to independently verify the authenticity and immutability of these documents. Construction plans and/or drawings stored in the distributed ledgers and/or blockchains can be used to ensure that the approved and unmodified versions of these documents are used at the construction site.
- food safety, e.g. information or logs related to food. For example, the origin and production details of food products may be documented in the distributed ledgers and/or the database(s) ensuring product safety and full traceability. Quality assurance documentation, such as quality inspections, microbiological analyses and test reports may be immutably stored.
- digital signatures; the storing method described herein may correspond to generating a digital signature, and the verifying method described herein to verifying the digital signature. In this context, the one or more entries may be e.g. a document (or in general, a file, or an entry or entries) to be signed. The verification ensures that the signed file has remained unchanged. The document to be signed may be, for example, a contract or deed of sale, e.g. in the sale of property, shares, or land.
- pharmaceutical industry, e.g. tests and approvals of pharmaceuticals. For example, a batch of a pharmaceutical product along with its associated quality conformance inspections may be logged/stored as described herein in immutable and auditable form to meet the strict good manufacturing practices and safety requirements of the pharmaceutical industry. Further, the results of clinical experiments and research data may be stored as described herein, ensuring the integrity and traceability of the data and thus allowing reliable and transparent auditing.
- energy sector, such as electricity and oil/gas. For example, service and maintenance documents, such as inspection documents and maintenance information, related to e.g. power plants and electric grids may be stored in immutable form to fulfil strict safety and regulatory requirements. Further, safety and/or maintenance reports associated with oil and gas lines may be documented in immutable form in the distributed ledgers and/or the database(s), facilitating transparent and quick auditing.
- healthcare, e.g. patient records and prescriptions. Patient-associated documents may be saved in the distributed ledgers and/or databases in immutable form and with full traceability, complying with strict healthcare standards and data protection standards, such as the General Data Protection Regulation (GDPR). Maintenance documents for medical devices, such as service and/or calibration information, may be immutably documented ensuring auditability and patient safety.
- logistics and transport, such as supply chain tracking and documentation and cold chain documentation e.g. for food products and/or vaccines. Shipping documents, delivery notes, reports of receipt may be stored as described herein to ensure the authenticity and immutability of the data throughout the supply chain. For cold chain documentation, temperature measurements and transport conditions may be reliably saved to the distributed ledgers and/or the database(s) to ensure an unbroken cold chain.
- defence and aviation; equipment service history and maintenance logs may be saved in immutable form to ensure a complete audit trail and safety of the equipment. The methods described herein may be used for immutably storing classified documents and drawings, as well as for auditing access rights to them.
- finance, e.g. banks and insurance companies; the methods described herein may be used for contract and signature management, and/or verifying and/or authenticating transactions. For example, contracts and digital signatures (described above) may be stored using the distributed ledgers and/or databases to ensure immutability of the contracts and their value as evidence. Audit reports and compliance documentation may be immutably documented to fulfil strict security and regulatory requirements.
- communications; verifying messages and/or documents e.g. in governance or the defence sector to ensure immutability

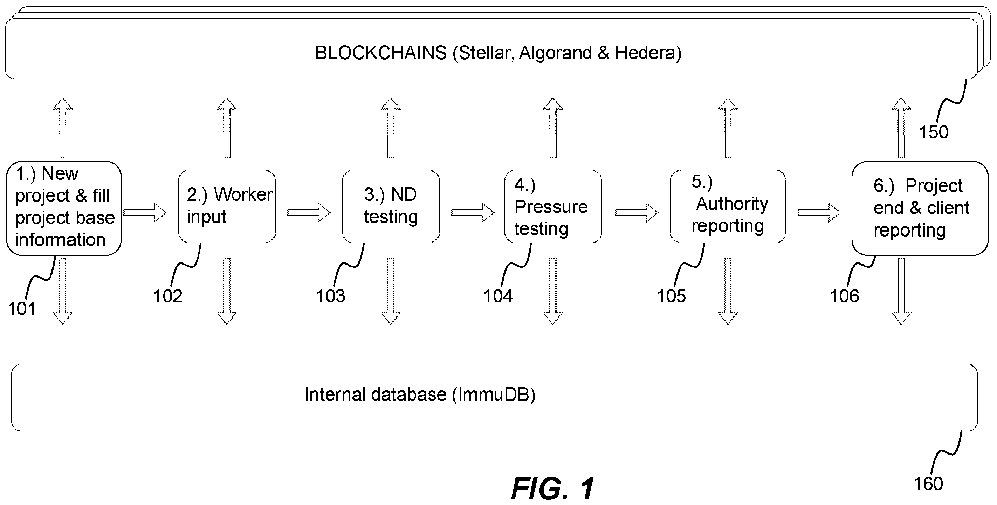

FIG. 1 depicts an example process of storing and verifying weld logs, in which the present solution may be applied. In step 101, an entity (e.g. a client) creates or initializes a new project and sets up basic information related to the project in a (software) service. The service includes an internal database 160, which may be implemented as an immutable database such as ImmuDB. The service includes or is coupled to a plurality of distributed ledgers and/or blockchains 150. Details of the new project are saved to the database 160 and/or the plurality of distributed ledgers and/or blockchains in the example of FIG. 1. For example, three distributed ledgers such as Stellar, Algorand and Hedera may be used as the plurality of distributed ledgers 150.

In step 102, a worker, such as a welder provides input data to the weld log as the project is ongoing and s/he is performing his or her work. A backend of the service computes checksums (hashes and/or signatures) of data including the welder's inputs and saves the checksums to the distributed ledgers 150 and/or the internal database 160. The data is also saved in the internal database 160. Step 102 may be repeated several times throughout the project until the welder's work is done. A plurality of welders may each provide their own inputs to the weld log.

In step 103, nondestructive tests (ND tests or NDTs) are performed to obtain NDT results. Similarly to step 102, the backend of the service computes checksums (hashes and/or signatures) of data including the NDT results and saves the checksums to the distributed ledgers 150 and/or the internal database 160. The ND test results are also saved in the internal database 160.

In step 104, pressure tests are performed to obtain pressure test results. Similarly to steps 102 and 103, the backend of the service computes checksums (hashes and/or signatures) of data including the pressure test results and saves the checksums to the distributed ledgers 150 and/or the internal database 160. The pressure test results are also saved in the internal database 160.

In step 105, the welding log is reported to an authority or authorities, which may verify that none of the data in the welding log has been tampered with using the checksums stored in the distributed ledgers 150 and/or the internal database 160. Even a change of one space in the stored values would lead to a non-matching checksum.

In step 106, the project is concluded and the welding log is reported to the client or entity, who may verify that none of the data in the welding log has been tampered with using the checksums stored in the distributed ledgers 150 and/or the internal database 160. The verification may be performed in the same manner as in step 105.

The data stored in the welding log may alternatively or additionally be used for other purposes, such as estimating the project schedule based on the timing of the welder's inputs.

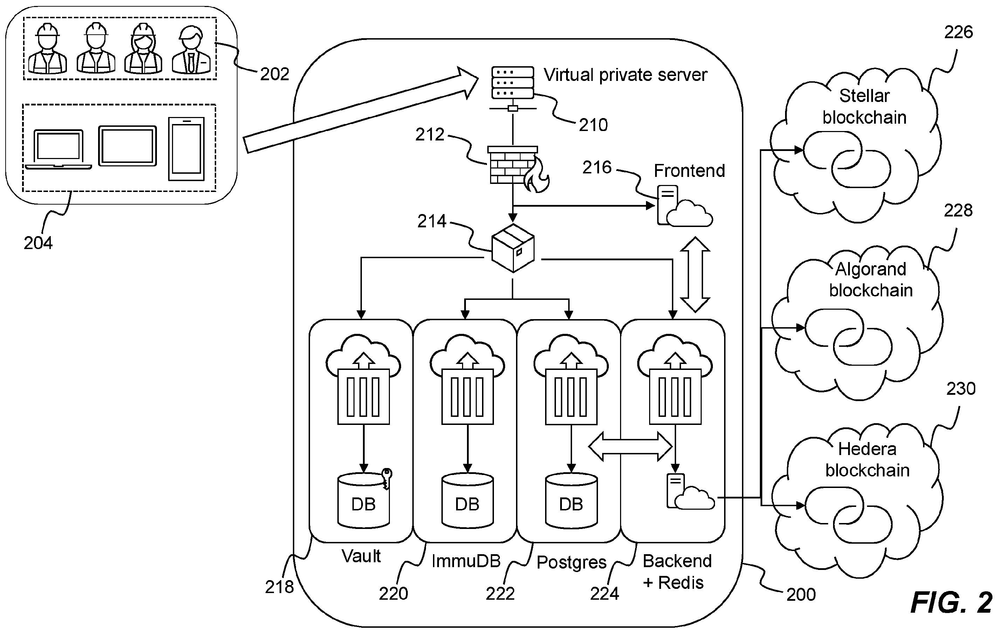

FIG. 2 depicts an example system suitable for implementing the process or service described in relation to FIG. 1. One or more users 202 includes e.g. the welder(s) providing input data to the weld log, the authorities who wish to inspect the weld log, and representatives of the client responsible for the project. The one or more users have one or more user devices 204, which may or may not be included in the system. Each user device 204 may be configured to receive user inputs from its respective user, such as the input data to the welding log, and/or to provide outputs, such as the welding log and/or the results of the verification of the welding log.

The user devices 204 may be personal computers, mobile devices, such as smartphones, tablet computers, laptops, smart watches, or other mobile computing devices, for example.

The one or more user devices 204 are configured to communicate with (the rest of) the system, such as an apparatus 200. The apparatus may comprise one or more software modules configured to cause performance of the apparatus. While some example software modules are shown in FIG. 2, the apparatus may alternatively include e.g. different modules and/or a subset of the modules shown. In the example of FIG. 2, the apparatus comprises a virtual private server module 210, a firewall module 212, a container module 214 such as a Docker container, and a frontend module 216. Container(s) provided by the container module may alternatively or additionally be implemented e.g. as servers in an intranet. The frontend module 216 may provide the interface(s) for communication with the user devices 204. The apparatus 200 further comprises database modules 218, 220, 222, 224, each implementing a database and an interface for storing and/or retrieving data from the database. In the example of FIG. 2, the four databases shown are implemented using HashiGroup Vault, ImmuDB, Postgres, and Redis. In alternative implementations, HashiGroup Vault may be replaced with e.g. Insta Key Vault, Azure Key Vault, AWS Secrets Manager, or Google Secret Manager; ImmuDB may be replaced with e.g. TerminusDB or Dolt; Postgres (also known as PostgreSQL) may be replaced with MariaDB or Oracle; and/or Redis may be replaced with ValKey, for example. Some or all of the database(s) may form the internal database 160 described in relation to FIG. 1. One of the database modules 224 may also implement the backend described in relation to FIG. 1 using e.g. a Redis server.

The apparatus 200 is coupled to a plurality of distributed ledgers 226, 228, 230, which may or may not be included as part of the system. As described in relation to FIG. 1, three distributed ledgers and/or blockchains, such as Stellar, Algorand, and Hedera, may be used. The apparatus may communicate with the distributed ledgers e.g. via the backend / database module 224.

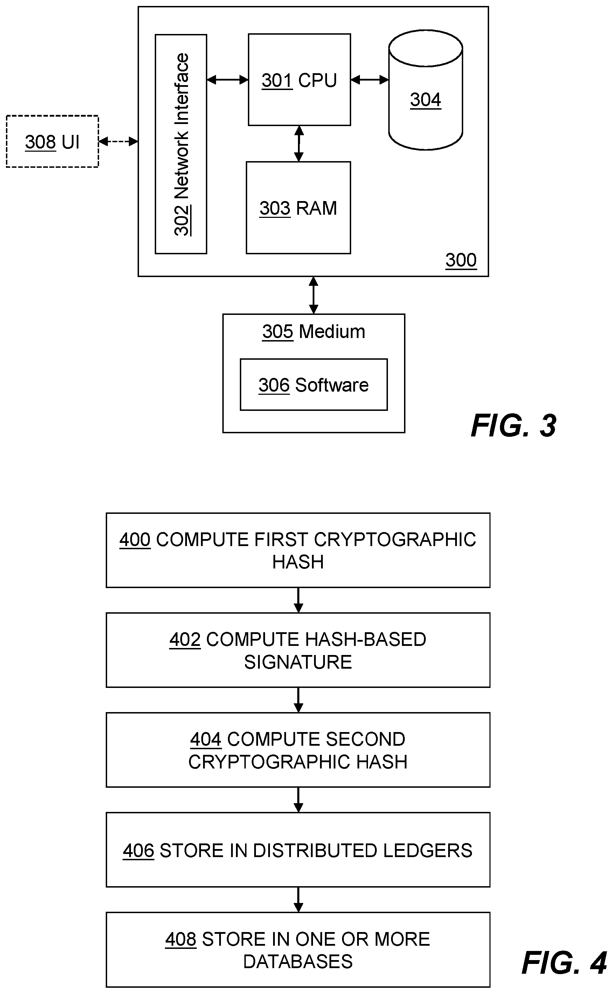

FIG. 3 is a schematic diagram depicting embodiments of an apparatus 300. The apparatus 300 may be a general-purpose computer, such as the apparatus 200 of FIG. 2. The user devices 204 of FIG. 2 may be implemented as the apparatus of FIG. 3. The apparatus 300 may include one or more processors, such as a central processing unit (CPU) 301 and/or a graphics processing unit (GPU). The apparatus 300 may include one or more memories 303, 304, such as a random access memory (RAM) 303, and/or non-volatile memory 304, which may store the one or more databases. Some example databases have been discussed above in relation to FIG. 1 and FIG. 2. The apparatus may be but need not be dedicated hardware. The apparatus may be a virtual machine. The method(s), described in more detail below, may be executed as a containerized application using operating system (OS) -level virtualization.

The apparatus 300 may comprise a network interface 302 for communicating with other devices via a network. The apparatus 300 may be located in a data center and accessible via the network through the network interface 302, especially when the apparatus is the apparatus 200 of FIG. 2. The network interface 300 may comprise one or more network interfaces, such as a cellular network interface, an Internet of Things (IOT) network interface, a personal area network (PAN) interface, and/or other suitable network interfaces. Referring now to the system shown in FIG. 2, the network interface of the apparatus 200 of FIG. 2 may be configured to establish the relevant connections to the user device(s) 204 and/or the distributed ledgers 226, 228, 230. The network interface may be configured to receive user input(s) from the user device(s) 204, and/or to send data (e.g. the weld log) and/or verification results of the data to the user device(s) 204. The network interface may be configured to send data (e.g. hashes and/or transaction identifiers) to the distributed ledgers 226, 228, 230, and/or to receive data (e.g. the hashes and/or the transaction identifiers) from the distributed ledgers 226, 228, 230. When the apparatus is the user device 204 of FIG. 2, the network interface may be configured to establish the connection to the apparatus 200, to send user input(s) to the apparatus 200, and/or to receive data (e.g. the weld log) and/or verification results of the data from the apparatus 200.

Referring again to FIG. 3, the apparatus 300 may comprise or be coupled to a user interface (UI) 308. When the apparatus 300 is the apparatus 200 of FIG. 2, the user interface may be omitted. When the apparatus 300 is a user device 204 of FIG. 2, the user interface may be included in the apparatus or coupled to the apparatus. The user interface 308 may comprise e.g., a display, a touchscreen, a speaker, a haptic output device, and/or other input and/or output devices. Input devices may be configured to receive user input(s), such as the input data to the welding log. Output devices may be configured to provide outputs, such as the welding log and/or the results of the verification of the welding log.

FIG. 4 is a flow chart depicting an embodiment of a (computer-implemented) method for storing data. The apparatus 300 of FIG. 3 may be configured to perform the method of FIG. 4 or any of its embodiments. The apparatus 300 may comprise means for performing the method of FIG. 4 or any of its embodiments. The means may comprise the one or more processors 301, one or more memories 303, 304 including computer program code, the one or more memories 303, 304 and the computer program code configured to, with the one or more processors 301, cause the apparatus 300 to perform the method of FIG. 4 or any of its embodiments. As mentioned above, the apparatus 300 may be the apparatus 200 of FIG. 2.

Referring again to FIG. 3, a computer program product or a computer-readable medium 305 comprises computer program code 306 configured to, when executed by one or more processors 301, cause an apparatus 300 or a system to perform the method of FIG. 4 or any of its embodiments. In an embodiment, the computer-readable medium is a non-transitory computer-readable medium.

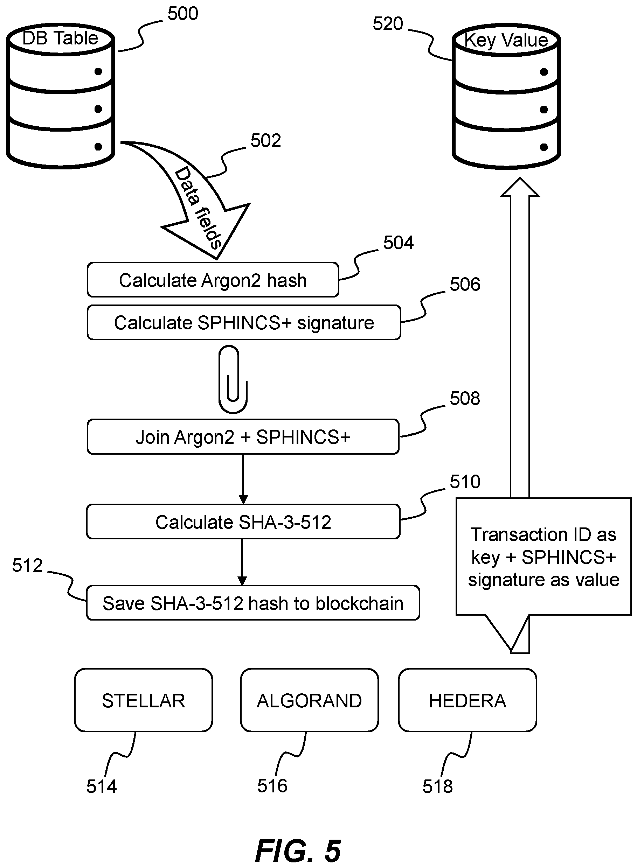

Embodiments of the method of FIG. 4 are now described in more detail with reference to FIG. 4 and FIG. 5, which shows an example implementation of the method of FIG. 4.

The method of FIG. 4 comprises computing 400 a first cryptographic hash for one or more entries to be stored in one or more databases using a first algorithm. The one or more entries may correspond e.g. to inputs to the weld log, or a document to be signed, as described above. The first cryptographic hash is preferably resistant to brute force attacks; it may be considered (at least) computationally secure or conditionally secure. The strength of a cryptographic hash may be measured by how long it would theoretically take an attacker to mount a successful brute-force attack against it; in the case of brute force resistant hashes, the time taken for a successful attack would be unreasonable or impractical.

FIG. 5 illustrates computing or calculating 504 the first cryptographic hash for entries or data fields 502. The entries may be stored in a temporary database table 500 before the computing. In the example of FIG. 5, the first cryptographic hash is an Argon2 hash, such as an Argon2d hash, an Argon2i hash, or an Argon2id hash. In general, the first cryptographic hash is preferably computed using a key derivation function, i.e. the first algorithm comprises a key derivation function. Preferably, the first algorithm (or the function and/or the computing) comprises key stretching. The Argon2 functions provide these features. A specification for version 1.3 of the Argon2 functions is provided in Argon2: the memory-hard function for password hashing and other applications, Alex Biryukov et al, March 24, 2017, available at https://www.cryptolux.org/images/0/0d/Argon2.pdf, and a reference implementation is provided on GitHub at https://github.com/p-h-c/phc-winner-argon2, both of which are incorporated by reference herein in their entirety.

The method of FIG. 4 further comprises computing 402 a hash-based signature for the one or more entries using a second algorithm. The hash-based signature is preferably quantum resistant; it may be considered (at least) to have information-theoretic security or unconditional security. Generally, information-theoretically secure signatures are impossible to break even with infinite computational power, and they are thus also resistant to brute-force attacks. Quantum resistant attacks are currently thought to be secure against a cryptanalytic attack by a quantum computer.

In the example of FIG. 5, the hash-based signature is computed or calculated 506 as a SPHINCS+ signature, such as a SPHINCS+-SHAKE256 signature, a SPHINCS+-SHA-256 signature, or a SPHINCS+-Haraka signature. Corresponding second algorithms include the SPHINCS+ algorithms such as the SPHINCS+-SHAKE256 algorithm, the SPHINCS+-SHA-256 algorithm, and the SPHINCS+-Haraka algorithm. In general, the hash-based signature is preferably a stateless hash-based signature. It is preferably based on at least one random or pseudorandom value to prevent regenerating the same signature for the same one or more entries by an attacker. These features are provided by the SPHINCS+ signatures. National Institute of Standards and Technology (NIST) Federal Information Processing Standards Publication (FIPS) 205 published on August 13, 2024 provides a standard for a suitable stateless hash-based digital signature algorithm (SLH-DSA) based on SPHINCS+ available at https://doi.org/10.6028/NIST.FIPS.205, and a reference implementation is available on GitHub at https://github.com/sphincs/sphincsplus, both of which are incorporated by reference herein in their entirety.

The hash-based signature (e.g. the SPHINCS+ signature) may be generated using a private key, which may be specific e.g. to a client or project.

The method of FIG. 4 further comprises computing 404 a second cryptographic hash based on the first cryptographic hash and the hash-based signature using a third algorithm. In the example of FIG. 5, the first cryptographic hash (Argon2 hash) and the hash-based signature (SPHINCS+ signature) are joined 508 before computing the second hash. The first cryptographic hash and the hash-based signature may be joined or combined e.g. by concatenating to form a concatenated hash. The second cryptographic hash may then be computed based on the concatenated hash.

The second cryptographic hash is preferably quantum resistant, like the hash-based signature. In the example of FIG. 5, the second hash is computed or calculated 510 using a Secure Hash Algorithm 3, SHA-3, algorithm, preferably a SHA3-512 algorithm. Thus, the second cryptographic hash may be a SHA-3 hash, such as a SHA-3-512 hash. NIST FIPS 202 published on August 4, 2015 specifies the SHA-3 family of functions on binary data and is available at http://dx.doi.org/10.6028/NIST.FIPS.202, and is incorporated by reference herein in its entirety. Several reference implementations of SHA-3 algorithms are available to the skilled person in different programming languages. For example, the hashlib library for the Python programming language provides one example implementation. Documentation of the hashlib library is available at https://docs.python.org/3/library/hashlib.html, which is incorporated by reference herein in its entirety.

The three algorithms used for computing the first cryptographic hash, the hash-based signature, and the second cryptographic hash are all different from each other. In other words, the first algorithm, the second algorithm, and the third algorithm each comprise at least one difference with respect to the other two of the algorithms. This increases the difficulty of attacks. The combination of Argon2, SPHINCS+ and SHA3-512 is preferred, but other combinations are also contemplated. In some scenarios with lower security standards, one or more of the three algorithms may be the same.

The method of FIG. 4 further comprises storing 406 the second cryptographic hash in a plurality of distributed ledgers. In the example of FIG. 5, the hash is saved 512 to three distributed ledgers: Stellar 514, Algorand 516, and Hedera 518. Stellar is a blockchain-type payment network, Algorand is a proof-of-stake blockchain, and Hedera, also known as Hedera Hashgraph, is a distributed ledger which uses a variant of proof of stake to reach consensus. At least three distributed ledgers are preferred for improved tamper-proofing. Preferably, the distributed ledgers comprise one or more blockchains (e.g. Algorand, Stellar). In some examples, the distributed ledgers comprise at least two or at least three blockchains. The combination of Stellar, Algorand and Hedera has been found to be particularly suitable for the present solution.

The method of FIG. 4 may comprise selecting the plurality of distributed ledgers (e.g. blockchains) from a pool of distributed ledgers (e.g. blockchains). The selection may be performed based on predetermined criteria, such as the status (e.g. faulty/functioning) of a distributed ledger, and/or at random, for example. The pool may comprise a greater number of distributed ledgers than the plurality of distributed ledgers to be selected. Preferably, the pool comprises at least four (or more) distributed ledgers. For example, three distributed ledgers may be selected from a pool comprising more than three (e.g. four) distributed ledgers. This improves the reliability of the method, as a non-functioning or faulty distributed ledger need not be used and may be replaced by another one from the pool. Security is also improved, as an attacker may not know which distributed ledgers of the pool have been used. The selected distributed ledgers may be stored in the one or more databases e.g. along with the transaction IDs from the selected distributed ledgers and/or embedded into the transaction IDs. Storing the transaction IDs is described in more detail below. For the verification method described in more detail below, the selected plurality of distributed ledgers may thus be obtained e.g. from the database(s).

The second cryptographic hash may be computed also based on at least one earlier second cryptographic hash stored in the plurality of distributed ledgers. The earlier second cryptographic hash may be one that was stored e.g. in a previous iteration of the method, for example. The earlier second cryptographic hash may be combined with the first cryptographic hash and the hash-based signature e.g. by concatenation as described above.

Storing the second cryptographic hash results in obtaining a plurality of transaction identifiers (IDs) from the plurality of distributed ledgers. One transaction ID may be obtained from each distributed ledger. For example, in the case of three distributed ledgers, three transaction IDs are obtained.

The method of FIG. 4 further comprises storing 408 the one or more entries, the hash-based signature, and the plurality of transaction identifiers in the one or more databases. The aforementioned entities may be stored in the same database or in different databases. Preferably, the one or more entries and the plurality of transaction identifiers are stored in the same database. Preferably, they are stored with a single database transaction. The single (atomic) transaction ties the addition or update to the one or more entries and the plurality of transaction IDs together, such that any changes to any subset of the entry/entries and the transaction IDs may be flagged as suspicious and considered when verifying the data stored in the database, as the expectation is that the original one or more entries and the plurality of transaction IDs were stored together.

The one or more databases are configured to track changes to their contents. At a minimum, the one or more databases are configured to log database transactions made to the one or more entries and the plurality of transaction identifiers. This refers to the one or more entries and the plurality of transaction IDs stored as explained above. The database(s) may contain multiple instances or locations of storing the one or more entries and the transaction IDs, and some of these may be subject to less strict tracking requirements - i.e. not all instances of the one or more entries and the plurality of transaction IDs need to be tracked for changes. It is sufficient that one set is tracked to ensure an opportunity for verification. For example, a PostgreSQL database with logging is suitable for logging database transactions made to the one or more entries and the plurality of transaction identifiers.

Preferably, the tracking is escalated such that the one or more entries and the plurality of transaction identifiers are stored in an immutable database (of the one or more databases). In an immutable or append-only database, data cannot be deleted or changed - only added. Additions, possibly repeated additions, of the one or more entries and/or the plurality of transaction identifiers serve as the log of database transactions made to the one or more entries and the plurality of transaction identifiers. Suitable immutable databases include e.g. ImmuDB.

The hash-based signature is also stored in the one or more databases. It may be stored in the same database as the one or more entries and the transaction IDs, or preferably in a different database of the one or more databases. The (database of the) one or more databases may be, but need not be configured to log database transactions made to the hash-based signature. Preferably, the hash-based signature is stored as the value of a key-value pair. (At least) one of the plurality of transaction IDs may be used as the key of the key-value pair. In the example of FIG. 5, the signature (SPHINCS+ signature) is stored in a key-value database 520 using e.g. the transaction ID obtained from the Hedera distributed ledger 518 as the key. In a preferred implementation, the transaction ID obtained from the Stellar distributed ledger 514 is used as the key. The key-value construction establishes a link between the hash-based signature and the other information related to the one or more entries via the key, such as the transaction ID.

The hash-based signature is preferably stored in the one or more databases in encrypted form. In this case, the method comprises encrypting the hash-based signature. Encryption adds another layer of security. The encryption may be performed e.g. using the ML-KEM algorithm described in NIST FIPS 203 published on August 13, 2024, available at https://doi.org/10.6028/NIST.FIPS.203 and incorporated by reference herein in its entirety.

In other implementations, the example algorithms described herein may be replaced by different algorithms. For example, the example algorithms described herein may be replaced with one another. For example, the SPHINCS+ algorithm(s), the SHA-3 algorithm(s), the Argon2 algorithm(s), and/or the ML-KEM algorithm(s) may be replaced with any of the aforementioned algorithms, or other algorithms. Preferably, a quantum resistant algorithm is replaced with another quantum resistant algorithm.

While the method of FIG. 4 has been described from the perspective of adding data to the one or more databases, authorized updates or deletions to the data may be performed in the same manner. Thus, updating or deleting the one or more entries stored in the one or more databases may also be performed in a verifiable manner with the method of FIG. 4. These changes will nevertheless remain traceable due to the configuration and/or nature of the database(s) used, i.e. the logging and/or the immutability. However, such authorized changes may pass verification if the hashes and signature are computed and stored in accordance with the method of FIG. 4. Unauthorized changes or deletions that do not follow the method of FIG. 4 would nevertheless lead to discrepancies that result in verification failure.

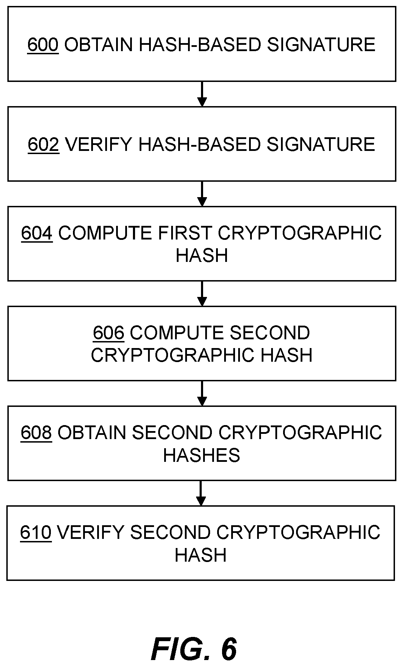

The method of FIG. 4 provides a solution to storing data reliably and with reduced risks of tampering. It enforces the authenticity of data and reduces opportunities for forging or modifying the data. Should such an attack nevertheless occur, traceability of changes is ensured by e.g. the logging and the distributed ledgers, which allow for tracing (unauthorized) changes to the data. A method of verifying the data stored according to the method of FIG. 4 is described in more detail below with reference to FIG. 6. The methods of FIG. 4 and FIG. 6 share several features, and repeated description of the shared features is omitted below.

FIG. 6 is a flow chart depicting an embodiment of a (computer-implemented) method for verifying data. The apparatus 300 of FIG. 3 may be configured to perform the method of FIG. 6 or any of its embodiments. The apparatus 300 may comprise means for performing the method of FIG. 6 or any of its embodiments. The means may comprise the one or more processors 301, one or more memories 303, 304 including computer program code, the one or more memories 303, 304 and the computer program code configured to, with the one or more processors 301, cause the apparatus 300 to perform the method of FIG. 6 or any of its embodiments. As mentioned above, the apparatus 300 may be the apparatus 200 of FIG. 2.

Referring again to FIG. 3, a computer program product or a computer-readable medium 305 comprises computer program code 306 configured to, when executed by one or more processors 301, cause an apparatus 300 or a system to perform the method of FIG. 6 or any of its embodiments. In an embodiment, the computer-readable medium is a non-transitory computer-readable medium.

For completeness, it is noted that the methods of FIG. 4 and FIG. 6 may be combined. The same apparatus may be configured to, or comprise means for performing both methods (or any of their embodiments). The computer program products described herein may be combined to a computer program product that comprises computer program code configured to, when executed by one or more processors, cause an apparatus or a system to perform both methods (or any of their embodiments).

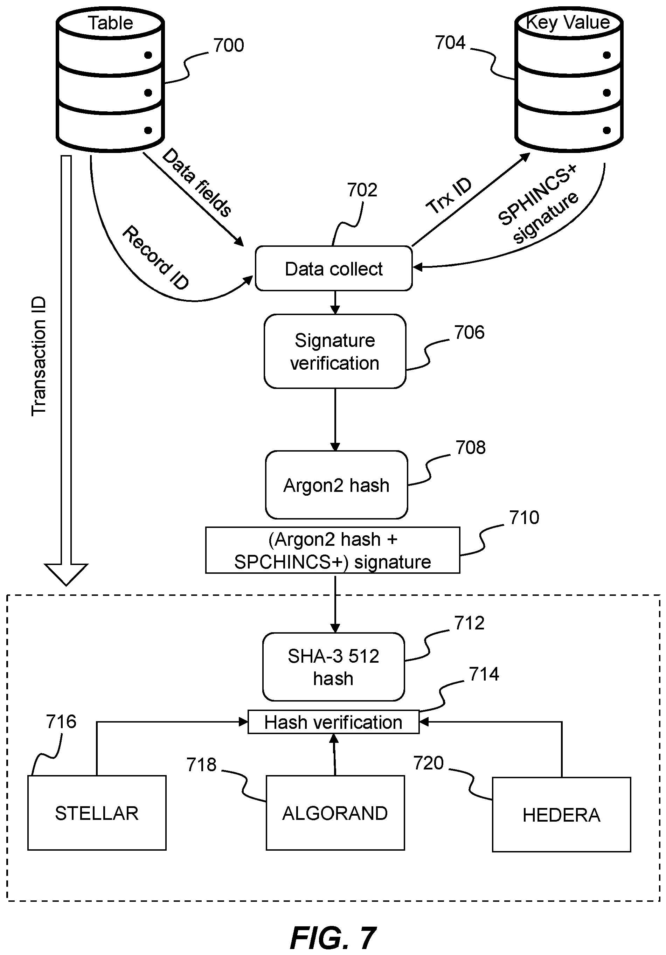

Embodiments of the method of FIG. 6 are now described in more detail with reference to FIG. 6 and FIG. 7, which shows an example implementation of the method of FIG. 6.

The method of FIG. 6 comprises obtaining 600 the hash-based signature computed using the second algorithm and stored in the one or more databases. In the example of FIG. 7, the hash-based signature (SPHINCS+ signature) is obtained from the key-value database 704 in a data collection step 702 using the transaction ID stored in the one or more databases, e.g. in a database 700. The key-value database 704 may correspond to the key-value database 520 of FIG. 5. The data collection step may also comprise retrieving or obtaining the one or more entries and the other transaction identifiers from the one or more databases, i.e. the database 700. As described above, the one or more databases (i.e. the database 700) are configured to at least log database transactions made to the one or more entries and the plurality of transaction identifiers.

The method of FIG. 6 further comprises verifying 602 that the hash-based signature corresponds to the stored one or more entries. When the hash-based signature was generated using a private key, the verifying may be performed e.g. using a public key which may be specific e.g. to the client or project. This public-private key scheme may be considered to implement pretty good privacy (PGP). Re-computing the hash-based signature for verification is generally not feasible in the case of signatures based on random or pseudorandom values such as the SPHINCS+ signatures, since the signature is expected to change if the (pseudo)random value is different on different iterations. In the example of FIG. 7, verification of the signature is illustrated in step 706.

The method of FIG. 6 further comprises computing 604 the first cryptographic hash for the stored one or more entries using the first algorithm. In the example of FIG. 7, the Argon2 hash is computed 708 for the stored one or more entries. The computing is performed in the same manner as when the one or more entries were stored in the method of FIG. 4. To ensure that the same hash is correctly obtained in both the method of FIG. 4 and the method of FIG. 6, a salt (which may be client or project-specific) used in the computing may be e.g. stored in the one or more databases and/or hard-coded. The same salt may thus be used in both methods, resulting in the same first cryptographic hash, given that the one or more entries have not changed.

The method of FIG. 6 further comprises computing 606 the second cryptographic hash based on the first cryptographic hash (computed in step 604) and the hash-based signature (obtained in step 600) using the third algorithm. Again, this is performed in the same manner as in the method of FIG. 4. In the example of FIG. 7, the Argon2 hash and the SPHINCS+ signature are first combined 710 (e.g. concatenated), and the second cryptographic hash, e.g. the SHA-3-512 hash, is computed 712 based on their combination as has been described above.

The method of FIG. 6 further comprises obtaining 608 the second cryptographic hashes stored in the plurality of distributed ledgers using the plurality of transaction identifiers. In the example of FIG. 7, the second cryptographic hashes are retrieved from the Stellar distributed ledger 716, the Algorand distributed ledger 718, and the Hedera distributed ledger 720. These correspond to the distributed ledgers 514, 516, 518 shown in FIG. 5. As the (same) second cryptographic hash was stored in all three ledgers, three identical second cryptographic hashes should be obtained using the transaction IDs. An additional check may be performed at this point to verify that the hashes are indeed identical, and if they are not, the verification need not continue any further.

The method of FIG. 6 further comprises verifying 610 the second cryptographic hash by comparing the computed second cryptographic hash to the stored second cryptographic hashes. In other words, the second cryptographic hash computed in step 606 is compared to each one of the second cryptographic hashes obtained from the distributed ledgers in step 608. If the hashes match, the verification results in a success, and if not, the verification results in a failure. In the example of FIG. 7, hash verification is shown in step 714.

The method of FIG. 6 allows for verifying the data stored in accordance with the method of FIG. 4, and provides the same and/or analogous technical effects as the method of FIG. 4. The method of FIG. 6 (or 7) may be stopped at any point if any of the checks included in the method indicate verification failure. Additional checks such as scanning the database(s) for changes made to the one or more entries and/or the plurality of transaction IDs may be included, since the database(s) are configured to log database transactions made to them. In some scenarios with less strict requirements, some of the method steps may be omitted for increased efficiency.

While this disclosure is presented from the point of view of a single apparatus performing each method, the apparatus may be implemented as a distributed apparatus or systems including a plurality of devices in communication with each other. For example, the apparatus 200 of FIG. 2 may be implemented as a distributed apparatus comprising a plurality of apparatuses e.g. according to FIG. 3. This distributed apparatus may be configured to perform the method of FIG. 4 and/or FIG. 6. Alternatively, or additionally, components of the apparatus shown e.g. in FIG. 2 and/or FIG. 3 may be distributed to several devices in communication with each other. For example, one or more of the memories, processors, or databases may be distributed e.g. in a cloud computing system.

If desired, the different functions discussed herein may be performed in a different order and/or concurrently with other. Furthermore, if desired, one or more of the above-described functions and embodiments may be optional or may be combined.

Although various aspects of the embodiments are set out in the independent claims, other aspects comprise other combinations of features from the described embodiments and/or the dependent claims with the features of the independent claims, and not solely the combinations explicitly set out in the claims.

It is also noted herein that while the above describes example embodiments, these descriptions should not be viewed in a limiting sense. Rather, there are several variations and modifications, which may be made without departing from the scope of the present disclosure as defined in the appended claims.

## Claims

1. A method comprising:
computing a first cryptographic hash for one or more entries to be stored in one or more databases using a first algorithm, wherein the first cryptographic hash is resistant to brute force attacks;
computing a hash-based signature for the one or more entries using a second algorithm, wherein the hash-based signature is quantum resistant;
computing a second cryptographic hash based on the first cryptographic hash and the hash-based signature using a third algorithm, wherein the second cryptographic hash is quantum resistant;
storing the second cryptographic hash in a plurality of distributed ledgers to obtain a plurality of transaction identifiers from the plurality of distributed ledgers; and
storing the one or more entries, the hash-based signature, and the plurality of transaction identifiers in the one or more databases, wherein the one or more databases are configured to log database transactions made to the one or more entries and the plurality of transaction identifiers, and
wherein the first algorithm, the second algorithm, and the third algorithm are different from each other.

2. A method comprising:
obtaining a hash-based signature computed using a second algorithm and stored in one or more databases, wherein the one or more databases are configured to store one or more entries, the hash-based signature, and a plurality of transaction identifiers, wherein the one or more databases are configured to log database transactions made to the one or more entries and the plurality of transaction identifiers, and wherein the hash-based signature is quantum resistant;
verifying that the hash-based signature corresponds to the stored one or more entries;
computing a first cryptographic hash for the stored one or more entries using a first algorithm, wherein the first cryptographic hash is resistant to brute force attacks;
computing a second cryptographic hash based on the first cryptographic hash and the hash-based signature using a third algorithm, wherein the second cryptographic hash is quantum resistant;
obtaining second cryptographic hashes stored in a plurality of distributed ledgers using the plurality of transaction identifiers; and
verifying the second cryptographic hash by comparing the computed second cryptographic hash to the stored second cryptographic hashes,
wherein the first algorithm, the second algorithm, and the third algorithm are different from each other.

3. The method of claim 1 or 2, wherein the second cryptographic hash is computed also based on at least one earlier second cryptographic hash stored in the plurality of distributed ledgers.

4. The method of any one of claims 1 to 3, wherein the method comprises:
concatenating the first cryptographic hash and the hash-based signature to form a concatenated hash; and
computing the second cryptographic hash based on the concatenated hash.

5. The method of any one of claims 1 to 4, wherein the hash-based signature is based on at least one random or pseudorandom value.

6. The method of any one of claims 1 to 5, wherein the plurality of distributed ledgers comprises at least three distributed ledgers.

7. The method of any one of claims 1 to 6, wherein the plurality of distributed ledgers comprises one or more blockchains.

8. The method of any one of claims 1 to 7, wherein the one or more entries and the plurality of transaction identifiers are stored in the one or more databases with a single database transaction.

9. The method of any one of claims 1 to 8, wherein at least one of the plurality of transaction identifiers and the hash-based signature are stored as a key-value pair in the one or more databases.

10. The method of any one of claims 1 to 9, wherein the one or more entries and the plurality of transaction identifiers are stored in an immutable database.

11. The method of any one of claims 1 to 10, wherein the first algorithm comprises a key derivation function, preferably comprising key stretching, more preferably an Argon2 function, such as Argon2d, Argon2i, or Argon2id.

12. The method of any one of claims 1 to 11, wherein the hash-based signature is a stateless hash-based signature, preferably a SPHINCS+ signature, such as a SPHINCS+-SHAKE256 signature, a SPHINCS+-SHA-256 signature, or a SPHINCS+-Haraka signature.

13. The method of any one of claims 1 to 12, wherein the third algorithm comprises a Secure Hash Algorithm 3, SHA-3, algorithm, preferably a SHA3-512 algorithm.

14. The method of any one of claims 1 to 13, wherein the hash-based signature is stored in the one or more databases in encrypted form.

15. An apparatus comprising one or more processors, one or more memories including computer program code, the one or more memories and the computer program code configured to, with the one or more processors, cause the apparatus to perform the method of any one of claims 1 to 14.

16. A computer program product comprising computer program code configured to, when executed by one or more processors, cause an apparatus or a system to perform the method of any one of claims 1 to 14.
